# DEMANDE DE BREVET EUROPEEN

(11) **EP 1 449 422 A1**
(43) Date de publication de la demande: **25.08.2004**
(21) Numéro de dépôt: 03013796.2
(22) Date de dépôt: 18.06.2003
(51) Int. Cl.: A01C 17/00, A01C 7/08

(54) **Semoir a plateau tournant equipe de moyens pneumatiques de propulsion des graines a l'interieur de conduits d'évacuation des graines hors du semoir**

(30) Priorité: 20.02.2003 FR 0302076
(71) Demandeur: Delimbeuf, Jean-Marie, 27340 Pont de l'Arche (FR)
(72) Inventeur: Delimbeuf, Jean-Marie, 27340 Pont de L'Arche (FR); Delimbeuf, Victor, 27340 Pont de L'Arche (FR)
(74) Mandataire: Arbousse-Bastide, Jean-Claude Philippe

(57) **Abrégé**

Le semoir de l'invention comprend un châssis (1) porteur d'une trémie (2) de réserve de graines à distribuer, ladite trémie (2) surplombant un plateau tournant (3) coiffé d'un capot (11) pour guider les graines lors de leur évacuation hors du semoir. Une turbine à ailette (13) est ménagée sous le plateau tournant (3), le flux d'air généré par la turbine (13) étant amené vers des conduits (14) d'admission des graines en vue de leur évacuation hors du semoir, lesdits conduits (14) étant répartis à la périphérie du capot (11) et débouchant au voisinage de la périphérie extérieure dudit plateau tournant (3), de sorte que la projection centrifuge des graines par le plateau tournant (3) soit complétée par une propulsion gazeuse conférant aux graines une dynamique suffisante pour les maintenir sur une trajectoire déterminée lorsqu'elles sont évacuées hors du semoir.

## Description

La présente invention est du domaine des activités agricoles, et plus particulièrement des semoirs mettant en oeuvre une distribution centrifuge des graines à partir d'un plateau tournant.

On connaît parmi les semoirs, ceux qui mettent en oeuvre un plateau tournant pour disperser les graines au sol. Plus particulièrement, ces semoirs comportent une trémie de réserve des graines qui surplombe ledit plateau tournant, les graines étant évacuées hors de la trémie naturellement par gravité vers le plateau tournant, pour être dispersées hors du semoir par projection centrifuge.

Un problème général posé dans le domaine de l'ensemencement réside dans la légèreté des graines, avec pour conséquence un contrôle difficile de leur zone de chute au sol lorsqu'elles sont dispersées. On relèvera que ce problème est d'autant plus important que l'ensemencement est pratiqué à l'extérieur, dans un environnement susceptible d'être venté. Il en résulte une répartition des graines au sol non homogène, et une incertitude quant à la distance à laquelle elles se trouvent réellement projetées.

Pour remédier à ce problème, il a été proposé d'équiper ledit plateau tournant de goulottes radiales de guidage des graines, et/ou d'un capot déflecteur qui coiffe le plateau tournant, pour canaliser les graines et contrôler leur trajectoire lors de leur dispersion au sol. On pourra notamment se reporter aux documents FR2784851 (DELIMBEUF) et GB995614 (ATKINSON'S OF CLITHEROE LTD) qui décrivent des semoirs du genre.

Il apparaît cependant à l'usage que de tels semoirs, même s'ils sont utiles, procurent des résultats qui restent insatisfaisants, notamment au regard de l'étendue du sol recevant les graines au cours d'un même passage du semoir, et de l'homogénéité de la répartition des graines au sol.

Le but de la présente invention est de proposer un semoir mettant en oeuvre un plateau tournant pour la dispersion des graines par centrifugation, qui soit organisé pour permettre une répartition homogène des graines sur une surface au sol relativement étendue, nonobstant leur légèreté.

Un tel semoir, visé par la présente invention, est particulièrement adapté à la dispersion de graines, dites vertes, tel que de gazon, de luzerne, de trèfle ou analogues.

Le semoir de la présente invention est du type de semoir comprenant un châssis équipé de moyens de fixation sur un engin agricole et porteur d'une trémie de réserve de graines à distribuer. Ladite trémie surplombe un plateau tournant pour la réception des graines naturellement évacuées hors de la trémie par gravité, ledit plateau tournant étant équipé de moyens pour son entraînement en rotation et d'un capot qui le coiffe pour guider les graines lors de leur évacuation hors du semoir.

La démarche inventive de la présente invention a consisté dans sa globalité à associer à la force centrifuge de projection des graines hors du semoir offerte par ledit plateau tournant, une force de propulsion des graines par air pulsé vers des conduits orientés tangentiellement par rapport au plateau tournant. Le dit air pulsé est produit par une turbine ménagée sous le plateau tournant, pour exploiter la dynamique de ce dernier en vue de la production du dit air pulsé, et en vue de faciliter et de simplifier l'organisation de l'amenée de l'air pulsé produit vers lesdits conduits.

Selon la présente invention, un semoir du type susvisé est principalement reconnaissable en ce qu'il est équipé de moyens pneumatiques générateurs d'un flux et de moyens d'amenée de ce flux vers les orifices d'une pluralité de conduits d'admission des graines en vue de l'évacuation de ces dernières hors du semoir, lesdits conduits étant répartis à la périphérie du capot et débouchant à travers ce dernier au voisinage de la périphérie extérieure du dit plateau tournant. Ces dispositions sont telles que la projection centrifuge des graines par le plateau tournant est complétée par une propulsion gazeuse conférant aux graines une dynamique suffisante pour les maintenir sur une trajectoire déterminée lorsqu'elles sont évacuées hors du semoir, nonobstant leur légèreté et les conditions climatiques, présence de vent notamment.

Il résulte finalement de ces dispositions que lors d'un passage du semoir au dessus du sol, les graines projetées à travers les conduits sont évacuées hors du semoir avec une dynamique favorisant l'obtention d'une répartition homogène des graines au sol sur une surface néanmoins étendue.

Selon un autre aspect de la présente invention, la structure du semoir du type exploitant un plateau tournant pour la dispersion des graines par force centrifuge est mise à profit pour organiser lesdits moyens pneumatiques à partir d'une turbine à ailettes, ou analogue, qui les constitue principalement, ladite turbine à ailettes étant ménagée sous ledit plateau tournant, à sa face inférieure opposée à celle supérieure de réception des graines en provenance de la trémie, pour générer ledit flux à partir de la rotation du plateau tournant.

Selon une forme avantageuse de réalisation exploitant encore le caractère tournant dudit plateau, lesdits moyens d'amenée du flux sont principalement constitués par des déflecteurs que comporte un anneau entourant de manière sensiblement coplanaire ledit plateau tournant au voisinage de sa périphérie, lesdits conduits débouchant respectivement entre deux déflecteurs successifs de l'anneau.

Ces dispositions sont telles que les graines projetées par le plateau tournant à partir de sa face supérieure sont propulsées à l'intérieur desdits conduits par le flux en provenance de la face inférieure du plateau tournant.

De préférence, lesdits conduits ont des longueurs respectives différentes pour disperser les graines suivant une répartition sensiblement concentrique autour du semoir qui est propre à chacun des conduits.

On relèvera que la longueur des conduits est de préférence individuellement réglable, et que ladite longueur est à titre indicatif de l'ordre comprise entre 40cm et 70cm pour une application du semoir aux graines dites vertes susvisées.

Selon une forme préférée de réalisation, lesdits conduits comprennent chacun un embout rigide pour leur fixation au dit capot, par soudage notamment ou analogue, ledit embout étant orienté suivant une direction sensiblement tangentielle au plateau tournant et étant prolongé par un tuyau relativement flexible.

La trémie est avantageusement équipée d'une trappe manoeuvrable entre une position de fermeture dans laquelle la trappe obture le débouché de la trémie pour interdire une évacuation des graines qu'elle contient, et une position d'ouverture dans laquelle la trappe libère le débouché de la trémie pour autoriser une évacuation des graines vers le plateau tournant. On comprendra que la trappe et les moyens pour sa manoeuvre constituent avantageusement des moyens de réglage du débit des graines évacuées hors de la trémie pour leur amenée vers la pateau en quantitée désirée, à partir d'une obturation au moins partielle réglable du débouché de la trémie par la trappe, comprise à titre indicatif entre 0 mm et 50 mm.

De préférence, ladite trappe est manoeuvrable en translation par l'intermédiaire d'une biellette mue par un organe moteur porté par ledit châssis, la mise en oeuvre dudit organe moteur étant placée sous la dépendance de moyens de commande localisés à l'intérieur de l'habitacle du véhicule agricole porteur du semoir.

De préférence encore, ladite trappe est équipée de moyens de réglage de sa position d'ouverture, constitués par exemple d'un organe de butée à l'encontre de la manoeuvre de la trappe en position extrême d'ouverture, ledit organe de butée étant supporté par le châssis de manière mobile et étant immobilisable en une position désirée par l'utilisateur.

Ledit organe de butée est par exemple constitué d'un curseur monté mobile en coulissement sur le châssis, ledit curseur comportant une lumière oblongue à son travers pour le passage d'une vis de blocage. On notera qu'une graduation est avantageusement ménagée sur le châssis en regard d'un repère que comporte ledit curseur, pour faciliter le réglage de la position du curseur par rapport à la positon extrême souhaitée de la trappe en position d'ouverture.

Ces dispositions sont telles que l'ouverture et la fermeture de la trappe peuvent être commandées à partir de l'habitacle dudit engin agricole porteur du semoir, la surface du débouché de la trémie libérée par la trappe en position d'ouverture, et donc la quantité de graines chutant vers le plateau tournant, étant prédéterminée à partir des dits moyens de réglage.

On comprendra que selon une forme de réalisation visant à simplifier la structure du semoir de l'invention, le réglage de la position dudit curseur est effectué par l'utilisateur manuellement, préalablement à l'utilisation du semoir. On comprendra néanmoins que de manière analogue, et selon une autre variante de réalisation desdits moyens de réglage, le réglage de la position dudit organe de butée peut être motorisé et commandé à partir de l'habitacle dudit engin agricole.

Selon une forme préférée de réalisation, la trappe comporte une ouverture correspondante au débouché de la trémie, et est guidé en translation sur le châssis par l'intermédiaire d'une poutre médiane qui soutient la trémie.

Selon une variante de réalisation dans laquelle la trémie est équipée un organe, tel qu'une vis sans fin, de brassage des graines à l'intérieur de la trémie, ladite trappe comporte une lumière oblongue à travers laquelle s'étend ledit organe de brassage, ce dernier étant monté coaxialement rotatif avec le plateau tournant, pour ne pas faire obstacle à la manoeuvre de la trappe entre ses positions d'ouverture et de fermeture.

Selon une forme avantageuse de réalisation dans laquelle ledit plateau tournant est équipé à sa base d'un moteur pour son entraînement en rotation, ledit moteur est supporté par une paroi de fond du capot, l'air aspiré par les moyens pneumatiques, et notamment par la turbine, circulant à travers la dite paroi de fond au moyen d'ajours qu'elle comporte.

L'air aspiré par les moyens pneumatiques est avantageusement exploité pour favoriser le refroidissement dudit moteur d'entraînement du plateau tournant. A cette fin, la paroi périphérique dudit capot est préférentiellement prolongée par une jupe pour placer ledit moteur dans un espace clos traversé par l'air aspiré par lesdits moyens pneumatiques, et notamment par la turbine.

La présente invention sera mieux comprise, et des détails en relevant apparaîtront, à la description qui va en être faite d'une forme préférée de réalisation, en relation avec les figures des planches annexées, dans lesquelles:
La fig.1 est une vue schématique en coupe axiale illustrant un semoir selon une forme préférée de réalisation de l'invention.
La fig.2 est une vue schématique de côté, partiellement écorchée, du semoir illustré sur la fig.1.
La fig.3 est une vue schématique de dessus du semoir illustré sur les figures précédentes, la trémie ayant été retiré.
La fig.4 est une vue schématique de dessous du semoir illustré sur les figures précédentes.

Sur les figures, un semoir comporte un châssis 1 supportant une trémie 2 de réserve de graines à semer, ladite trémie surplombant un plateau tournant 3 de réception des graines à sa face supérieure 4. Cette trémie 2 est préférentiellement maintenue sous pression, et est équipée d'un couvercle étanche.

Le châssis 1 est par exemple principalement composé d'une plaque 5 renforcée par des poutres latérales 6 et 7, la dite plaque 5 supportant une poutre médiane 8 porteuse de la trémie 2. On comprendra que ladite poutre médiane 8 est pourvue d'une ouverture 9 pour libérer le débouché de la trémie 2.

Ledit plateau tournant 3 est entraîné en rotation au moyen d'un organe moteur 10 situé à sa base, ledit organe moteur 10 étant fixé à un capot 11, qui est lui-même fixé au châssis 1 de manière à envelopper le plateau tournant 3. On remarquera sur les figures que ces différentes fixations sont par exemple réalisées par boulonnage.

La face inférieure 12 du plateau tournant 3 est aménagée en turbine à ailettes 13, pour générer de l'air pulsé (flèches A) amené vers le débouché de conduits 14 qui sont supportés par la paroi périphérique du capot 11 en étant orientés tangentiellement au plateau tournant 3 de manière à déboucher au voisinage de sa périphérie. Le plateau tournant est entouré d'un anneau 15 qui comporte à sa base une pluralité de déflecteurs successifs 16, par l'intermédiaire desquels déflecteurs 16 ledit anneau 15 est fixé au capot 11, pour amener l'air pulsé par la turbine 13 vers le débouché des conduits 14.

On remarquera que des ajours 17, par exemple conformés en lumières oblongues, sont ménagés dans la paroi de fond 18 du capot 11, pour autoriser l'air à circuler à son travers.

On remarquera encore à ce stade de la description que la paroi périphérique du capot 11 est prolongée vers le bas par une jupe 19 entourant l'organe moteur 10 d'entraînement en rotation du plateau tournant 3, pour favoriser un refroidissement dudit organe moteur 10 en le plaçant à l'intérieur d'un espace clos traversé par l'air en circulation.

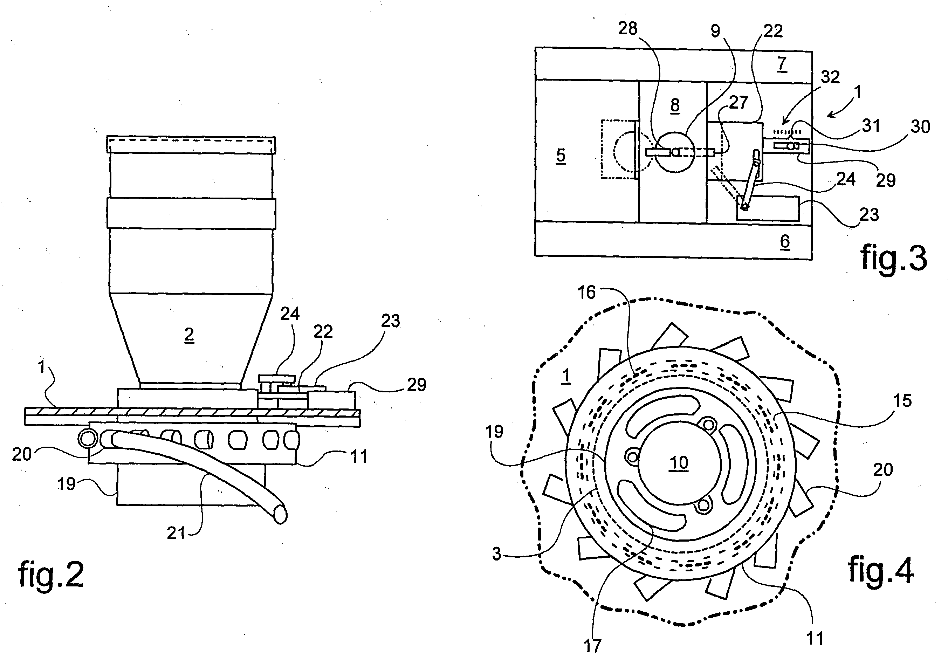

En se reportant plus particulièrement sur la fig.2, les conduits 14 sont chacun composés d'un embout 20 pour leur fixation au capot 11, sur lequel embout 20 est enfilé un tuyau flexible 21 (un seul tuyau flexible est représenté sur la figure). On comprendra que ces tuyaux flexibles 21 ont néanmoins une tenue naturelle, et qu'ils ont une longueur respective différente pour disperser les graines concentriquement autour du capot 11 sur une distance qui leur est propre.

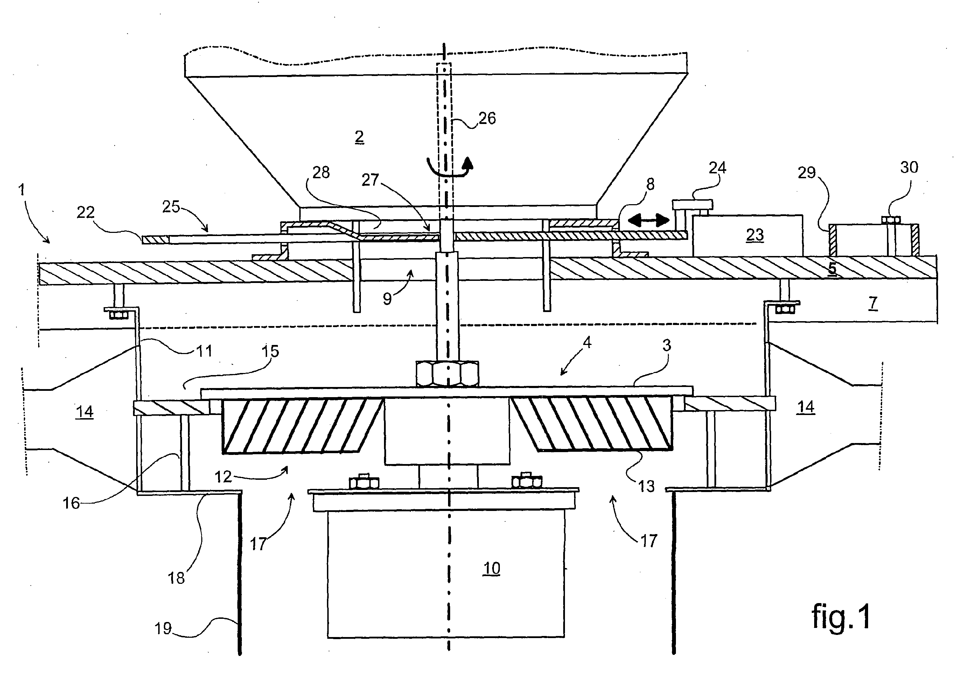

En revenant plus particulièrement sur les fig.1, fig.2 et fig.3, le débouché de la trémie 2 est obturable par une trappe 22 montée coulissante sur le châssis 1. Ladite trappe 22 est manoeuvrable au moyen d'un organe moteur 23, par l'intermédiaire d'une biellette 24, entre une position d'ouverture dans laquelle la trappe 22 libère le débouché de la trémie 2 et une position de fermeture dans laquelle la trappe 22 obture ledit débouché. On comprendra qu'à cet effet, la trappe 22 comporte une ouverture 25 correspondante au débouché de la trémie 2, en vue de leur mise en regard l'un sur l'autre en position d'ouverture de la trappe 22.

Un malaxeur 26 est monté coaxialement rotatif avec le plateau tournant 3, pour favoriser la chute des graines hors de la trémie 2 en position d'ouverture au moins partielle de la trappe 22. Cette dernière 22 comporte en outre une lumière 27 pour le passage du malaxeur 26 à son travers, afin que ce dernier 26 ne fasse pas obstacle à la manoeuvre de la trappe 22 en position de fermeture. Une languette d'obturation 28 permet de masquer ladite lumière 27 réservée au passage du malaxeur 26 en vue d'interdire un passage inopiné des graines à son travers lorsque la trappe 22 est en position de fermeture. Ladite languette 28 est avantageusement issue de la poutre médiane 8 du châssis 1 par découpage-pliage. On relèvera que cette languette 28 participe du guidage de la trappe 22 lors de sa manoeuvre.

Un curseur 29 de réglage de la course de la trappe 22 est rapporté sur ladite plaque 5 du châssis 1. Ledit curseur 29, monté mobile sur le châssis 1 et immobilisable en une position souhaitée par l'utilisateur au moyen d'une vis de blocage 30, constitue un organe de butée à l'encontre d'une manoeuvre de la trappe 22 en position extrême d'ouverture. On remarquera plus particulièrement sur la fig.3 que ledit curseur 29 est pourvu d'un repère 31 de sa position, selon une graduation 32 ménagée sur ladite plaque 5 du châssis 1.

## Revendications

1. Semoir du type comprenant un châssis (1) équipé de moyens de fixation sur un engin agricole et porteur d'une trémie (2) de réserve de graines à distribuer, ladite trémie (2) surplombant un plateau tournant (3) pour la réception des graines naturellement évacuées hors de la trémie (2) par gravité, ledit plateau tournant (3) étant équipé de moyens (10) pour son entraînement en rotation et d'un capot (11) qui le coiffe pour guider les graines lors de leur évacuation hors du semoir, **caractérisé en ce qu'**il est équipé de moyens pneumatiques (13) générateurs d'un flux et de moyens (15,16) d'amenée de ce flux vers les orifices d'une pluralité de conduits (14) d'admission des graines en vue de l'évacuation de ces dernières hors du semoir, lesdits conduits (14) étant répartis à la périphérie du capot (11) et débouchant à travers ce dernier au voisinage de la périphérie extérieure du dit plateau tournant (3), de sorte que la projection centrifuge des graines par le plateau tournant (3) soit complétée par une propulsion gazeuse conférant aux graines une dynamique suffisante pour les maintenir sur une trajectoire déterminée lorsqu'elles sont évacuées hors du semoir.

2. Semoir à plateau tournant selon la revendication 1, **caractérisé en ce que** lesdits moyens pneumatiques sont principalement constitués d'une turbine à ailettes (13) ménagée sous ledit plateau tournant (3), à sa face inférieure (12) opposée à celle supérieure (4) de réception des graines en provenance de la trémie (2), pour générer ledit flux à partir de la rotation du plateau tournant (3).

3. Semoir à plateau tournant selon la revendication 2, **caractérisé en ce que** lesdits moyens d'amenée du flux sont principalement constitués par des déflecteurs (16) que comporte un anneau (15) entourant de manière sensiblement coplanaire ledit plateau tournant (3) au voisinage de sa périphérie, lesdits conduits (14) débouchant respectivement entre deux déflecteurs (16) successifs de l'anneau (15), de sorte que les graines projetées par le plateau tournant (3) à partir de sa face supérieure (4) soient propulsées à l'intérieur desdits conduits (14) par le flux en provenance de la face inférieure (12) du plateau tournant (3).

4. Semoir à plateau tournant selon l'une quelconque des revendications précédentes, **caractérisé en ce que** lesdits conduits (14) ont des longueurs respectives différentes pour disperser les graines suivant une répartition sensiblement concentrique autour du semoir qui est propre à chacun des conduits (14).

5. Semoir à plateau tournant selon l'une quelconque des revendications précédentes, **caractérisé en ce que** lesdits conduits (14) comprennent chacun un embout rigide (20) pour leur fixation au dit capot (11), ledit embout (20) étant orienté suivant une direction sensiblement tangentielle au plateau tournant (3) et étant prolongé par un tuyau (21) relativement flexible.

6. Semoir à plateau tournant selon l'une quelconque des revendications précédentes, **caractérisé en ce que** la trémie (2) est équipée d'une trappe (22) manoeuvrable entre une position de fermeture dans laquelle la trappe (22) obture le débouché de la trémie (2) pour interdire une évacuation des graines qu'elle contient, et une position d'ouverture dans laquelle la trappe (22) libère le débouché de la trémie (2) pour autoriser une évacuation des graines vers le plateau tournant (3).

7. Semoir à plateau tournant selon la revendication 6, **caractérisé en ce que** ladite trappe (22) est manoeuvrable en translation par l'intermédiaire d'une biellette (24) mue par un organe moteur (23) porté par ledit châssis (1), la mise en oeuvre dudit organe moteur (23) étant placée sous la dépendance de moyens de commande localisés à l'intérieur de l'habitacle du véhicule agricole porteur du semoir.

8. Semoir à plateau tournant selon l'une quelconque des revendications 6 et 7, **caractérisé en ce que** la trappe (22) comporte une ouverture (25) correspondante au débouché de la trémie (2), et est guidé en translation sur le châssis (1) par l'intermédiaire d'une poutre médiane (8) qui soutient la trémie (2).

9. Semoir à plateau tournant selon l'une quelconque des revendications 6 à 8, **caractérisé en ce que** la trappe (22) est équipée de moyens de réglage (29,30,31) de sa position d'ouverture.

10. Semoir à plateau tournant selon l'une quelconque des revendication 6 à 9, **caractérisé en ce que** ladite trappe (22) comporte une lumière oblongue (27) à travers laquelle s'étend un organe (26) de brassage des graines à l'intérieur de la trémie (2), ledit organe de brassage étant monté coaxialement rotatif avec le plateau tournant (3).

11. Semoir à plateau tournant selon l'une quelconque des revendications précédentes, **caractérisé en ce que** ledit plateau tournant (3) est équipé à sa base d'un moteur (10) pour son entraînement en rotation, ledit moteur (10) étant supporté par une paroi de fond (18) du capot (11), ladite paroi de fond (18) comportant des ajours (17) pour la circulation à son travers de l'air aspiré par les moyens pneumatiques (13).

12. Semoir à plateau tournant selon la revendication 11, **caractérisé en ce que** la paroi périphérique du capot (11) est prolongée par une jupe (19) en vue de favoriser le refroidissement dudit moteur (10) d'entraînement du plateau tournant (3) en le plaçant dans un espace clos traversé par l'air aspiré par lesdits moyens pneumatiques (13).
